# EUROPEAN PATENT APPLICATION

(11) **EP 4 794 042 A2**
(43) Date of publication of application: **19.08.2026**
(21) Application number: 26191130.9
(22) Date of filing: 09.07.2026
(51) Int. Cl.: H01M 10/052, H01M 50/533, H01M 50/534, H01M 50/536, H01M 10/0525

(54) **SECONDARY BATTERY AND ELECTRONIC DEVICE**

(30) Priority: 09.07.2025 CN 202510944270
(71) Applicant: Ningde Amperex Technology Limited, Ningde, Fujian 352100 (CN)
(72) Inventor: FENG, Yunhao, Ningde, 352100 (CN)
(74) Representative: Dehns Germany Partnerschaft mbB

(57) **Abstract**

The present application discloses a secondary battery (100) and an electronic device. A first current collector (211) is provided with a first foil-free zone (211a). A first tab (30) includes a first portion (31) and a second portion (32) that are connected to each other. The first portion (31) is disposed on the first foil-free zone (211a). The second portion (32) extends out of a first electrode sheet (21). A first adhesive layer (50) is bonded between the first foil-free zone (211a) and the first portion (31). The first tab (30) includes a first surface (30a) and a second surface (30b) that are oppositely arranged. The first surface (30a) of the first portion (31) is provided with a plurality of first protrusions (30c). The first adhesive layer (50) is partially embedded between two adjacent first protrusions (30c). The second surface (30b) of the first portion (31) is provided with a plurality of second protrusions (30d). Along a first direction (Z), projections of at least one of the second protrusions (30d) at least partially overlap with projections of the first protrusions (30c), and/or projections of at least one of the second protrusions (30d) are located between projections of two adjacent first protrusions (30c). The connection process between the first tab (30) and the first current collector (211) can be simplified, energy density can be increased, and the connection strength between the first tab (30) and the first current collector (211) can be improved.

## Description

### TECHNICAL FIELD

The present application relates to the field of battery technologies, and in particular to a secondary battery and an electronic device.

### BACKGROUND

A tab serves as a bridge for electrically connecting a secondary battery to an external circuit, and the tab is usually made of a metal material. The tab is welded to a current collector inside the secondary battery, which can enable the tab to electrically connected to an electrode assembly inside the secondary battery, so as to achieve the purpose of transmitting current.

To facilitate welding of the tab, a double-sided foil-free zone is usually disposed on the current collector. A welding base supports the current collector on one side of the foil-free zone, and a welding head welds the tab to the current collector on the other side of the foil-free zone. However, welding between the tab and the foil-free zone of the current collector usually generates a number of welding burrs. Thus, a larger-sized insulating layer needs to be used on both sides of the current collector to cover the welding position, which will lead to a loss in energy density of the secondary battery.

### SUMMARY

The present application aims to provide a secondary battery and an electronic device, aiming to improve the energy density of the secondary battery.

According to a first aspect, the present application provides a secondary battery, including a first tab and a first electrode sheet. The first electrode sheet includes a first current collector and a first active material layer. Along a first direction, the first active material layer is stacked on a surface of the first current collector. The first direction is a thickness direction of the first electrode sheet. The first current collector is provided with a first foil-free zone. The first tab includes a first portion and a second portion that are connected to each other. The first portion is disposed on the first foil-free zone. The second portion extends out of the first electrode sheet. The secondary battery further includes a first adhesive layer. The first adhesive layer is bonded between the first foil-free zone and the first portion. The first tab includes a first surface and a second surface that are oppositely arranged. The first surface faces the first foil-free zone. The first surface of the first portion is provided with a plurality of first protrusions. The first adhesive layer is partially embedded between two adjacent first protrusions. The second surface of the first portion is provided with a plurality of second protrusions. Along the first direction, projections of at least one of the second protrusions at least partially overlap with projections of the first protrusions, and/or projections of at least one of the second protrusions are located between projections of two adjacent first protrusions.

In the above technical solution, the projections of the second protrusions at least partially overlap with the projections of the first protrusions, which means that a part of the projection of one of the second protrusions overlaps with the projection of one of the first protrusions. The first tab is adhesively fixed to the first foil-free zone through the first adhesive layer, with no welding burrs generated, which can reduce the risk that welding burrs pierce the separator and cause a short circuit due to contact between the positive electrode and the negative electrode, thereby improving the safety performance of the secondary battery. Moreover, there is no need to arrange an insulating layer on the first active material layer to cover the welding burrs, which can reduce the space occupied by the insulating layer and facilitates the full utilization of the first active material layer, thereby improving the energy density of the secondary battery while reducing costs. Furthermore, the adhesive bonding process is relatively simple and does not require complex welding equipment or professional welding technicians. Compared with traditional welding processes, the adhesive bonding process can eliminate steps such as pre-welding preparation, equipment commissioning, and strict inspection of welding quality during welding. The first protrusions on the surface of the first tab are embedded into the first adhesive layer by pressing with a pressing block, so that the first tab is adhesively fixed to the first current collector. The process is simpler, which helps to improve the production efficiency of the secondary battery and reduce production costs. In addition, the arrangement of the first protrusions allows the first adhesive layer to be partially embedded between two adjacent first protrusions, which helps to fill the tiny gaps between the first tab and the first foil-free zone, increases the bonding area between the first adhesive layer and the first tab, and enhances the connection strength between the first tab and the first current collector.

At the same time, the projections of at least one of the second protrusions at least partially overlap with the projections of the first protrusions. When the first tab and the first current collector are press-bonded and bonded to each other, the second protrusions and the first protrusions may form an opposing structure in the vertical direction during press-bonding. A projection overlapping region will produce a pressure superposition effect, which concentrates the instantaneous pressure when the first protrusions pierce the first adhesive layer. This allows the first protrusions to pierce the first adhesive layer easily, so as to realize direct contact and electrical connection between the first protrusions and the first current collector, and mitigate the unsatisfactory piercing effect caused by unilateral force.

Furthermore, the projections of at least one of the second protrusions are located between the projections of two adjacent first protrusions. When the first tab and the first current collector are press-bonded and bonded to each other, the positions of the second protrusions are exactly positioned in the space between two adjacent first protrusions, and squeeze the first adhesive layer between the two first protrusions. The first adhesive layer thus fully fills the tiny gaps between two adjacent first protrusions and the gaps between the first tab and the first current collector, which reduces bubble residue and further enhances the bonding strength.

It can be understood that when the projections of at least one of the second protrusions at least partially overlap with the projections of the first protrusions, and the projections of at least one of the second protrusions are located between the projections of two adjacent first protrusions, this does not refer to different parts of the same second protrusion, but means that the second protrusions include two groups divided by quantity or region. The projection of at least one second protrusion in a first group at least partially overlaps with the projections of the first protrusions, and the projections of the second protrusions in a second group are located between the projections of two adjacent first protrusions.

In some embodiments, at least one of the first protrusions are in direct contact with the first foil-free zone, thereby realizing contact electrical connection between the first protrusions and the first foil-free zone, forming a metal-metal solid-state current transmission channel, and reducing contact resistance.

In some embodiments, the first active material layer is provided with a first groove. The first current collector is partially exposed at the first groove and forms the first foil-free zone. The first portion of the first tab is disposed in the first groove. The first electrode sheet further includes a second active material layer. The second active material layer is disposed on a surface of the first current collector facing away from the first active material layer. Along the first direction, a projection of the second active material layer overlaps with the first groove. The adhesive tab structure does not require a welding head or a welding base. The second active material layer does not need to be provided with any groove. The structure of the second active material layer is more complete, which increases the proportion of active material and improves the energy density of the secondary battery.

In some embodiments, the secondary battery further includes a separator. A surface of the second active material layer facing away from the first active material layer is stacked with the separator. The second active material layer includes a first region. Along the first direction, a projection of the first region coincides with the first groove, and a surface of the first region facing away from the first current collector is in direct contact with the separator. Since the adhesive tab structure is adopted in the present application, there is no need to clean the first region to form a foil-free zone for welding. There are no weld marks or welding burrs. The first region does not need to be provided with any insulating layer to cover the welding burrs. This not only reduces the space occupied by the insulating layer and improves energy density, but also enables the first region to be in direct contact with the separator, so that lithium ions can migrate between the first region and the second electrode sheet, which facilitates the full utilization of the second active material layer and improves the energy density of the secondary battery.

In some embodiments, the secondary battery further includes a separator and a second electrode sheet. Along the first direction, the separator is stacked between the first electrode sheet and the second electrode sheet. The first electrode sheet is a positive electrode sheet, and the second electrode sheet is a negative electrode sheet. The second electrode sheet includes a second current collector and a third active material layer. A surface of the second current collector facing the first active material layer is stacked with the third active material layer. The third active material layer includes a second region. Along the first direction, a projection of the second region coincides with the first groove, and a surface of the second region facing the first groove is in direct contact with the separator. The second region does not need to be provided with any third insulating layer. This not only reduces the space occupied by the third insulating layer and improves the energy density of the secondary battery, but also enables the second region to be in direct contact with the separator, that is, the second region can directly participate in electrochemical reactions, which facilitates the full utilization of the third active material layer and improves the energy density of the secondary battery.

In some embodiments, a second surface of the first portion is provided with a first insulating layer. The first insulating layer is partially embedded between two adjacent second protrusions, and the first insulating layer is bonded to the second protrusions, which helps to form a tooth-like interlocking structure. When the first insulating layer is pulled by an external force, the second protrusions may catch the first insulating layer, which enhances the bonding strength between the second protrusions and the first insulating layer and reduces relative slippage between the first insulating layer and the first tab. At the same time, the arrangement of the second protrusions increases a bonding area between the first tab and the first insulating layer, which may form an anchoring structure and reduce the risk of the first insulating layer falling off.

In some embodiments, along a direction from the first portion to the first foil-free zone, a width of the first protrusions in a second direction is set to decrease, and the second direction is perpendicular to the first direction. This makes the first protrusions wider at the top and narrower at the bottom, which can reduce the piercing resistance of the first protrusions, so that the first protrusions easily pierce the first adhesive layer and realize direct contact and electrical connection with the first current collector. A stable metal-metal electrical connection channel may be formed without applying high pressure or performing precise alignment, thereby reducing contact resistance.

In some embodiments, the first adhesive layer includes hot-melt adhesive, thermosetting adhesive, or pressure-sensitive adhesive. After being heated and melted, the hot-melt adhesive may fill the concave-convex structure on the first tab and then may be cooled and solidified in a short time to achieve bonding with the first current collector. After curing, the thermosetting adhesive endows the first adhesive layer with high strength and hardness, which can prevent damage and tearing of the first tab. The pressure-sensitive adhesive requires no heating, solvent activation or a complex curing procedures. Bonding can be realized by applying only light pressure. This type of adhesive features simple and fast operation and is suitable for bonding the concave-convex structure of the first tab.

In some embodiments, the first protrusions protrude relative to the first surface. The first surface is further provided with a plurality of first recesses. The first recesses are recessed relative to the first surface. The first adhesive layer is embedded in the first recesses. The first recesses filled with the first adhesive layer form reverse slots, and the two structures jointly constitute a three-dimensional mechanical interlocking structure. Furthermore, the presence of the first recesses provides additional adhesive storage space for the first adhesive layer. Particularly during press-bonding of the first tab and the first current collector, the first adhesive layer preferentially fills the recesses after being squeezed, and then the first adhesive layer flows to the periphery of the first protrusions, which facilitates direct contact and electrical connection between the first protrusions and the first current collector. At the same time, the first recesses further increase the contact area between the first tab and the first adhesive layer, so that the connection strength between the first tab and the first current collector is further enhanced.

In some embodiments, along the first direction, a height of the first protrusions is H₁, with 10 µm≤H₁≤30 µm, which helps to increase a bonding area between the first tab and the first adhesive layer, enhance the bonding strength between the first tab and the first current collector, lower the press-bonding damage caused by the first protrusions to the first current collector, and reduce the material loss of the first adhesive layer.

In some embodiments, along the first direction, a depth of the first recesses is D₁, with 5 µm≤D₁≤30 µm, which helps to improve the mechanical anchoring effect between the first tab and the first adhesive layer, enhance the connection strength between the first tab and the first current collector, reduce the waste of the first adhesive layer material, and lessen the impact on the strength of the first tab.

In some embodiments, when observed along the first direction, an area of the first surface of the first portion is S₁, and an area of all the first protrusions is S₁₁, with 60%≤S₁₁/S₁≤80%. This ensures sufficient electrical connection contact points between the first tab and the first current collector, reduces contact resistance, and improves current transmission efficiency. Moreover, the planar or recessed region is greater than or equal to 20%, so that the first tab may be bonded with a sufficient amount of the first adhesive layer. This makes the connection between the first tab and the first current collector more stable and avoids the first tab from loosening due to vibration or electrode sheet swelling.

In some embodiments, when observed along the first direction, an area of the first surface of the first portion is S₁, and an area of all the first recesses is S₁₂, with 20%≤S₁₂/S₁≤40%. When the proportion of the first recesses S₁₂/S₁ is greater than or equal to 20%, the embedding amount of the first adhesive layer is sufficient to enhance the connection strength between the first tab and the first current collector. When S₁₂/S₁ is less than or equal to 40%, a relatively large area is still retained for direct contact between the first protrusions and the first current collector, so the conductive performance can be improved while the bonding strength is enhanced.

According to a second aspect, the present application further provides an electronic device, including the secondary battery according to any embodiment of the first aspect described above.

Additional aspects and advantages of the embodiments of the present application will be described, shown, or explained through the implementation of the embodiments of the present application in subsequent descriptions.

### BRIEF DESCRIPTION OF DRAWINGS

One or more embodiments are exemplarily described by figures in the corresponding accompanying drawings. These exemplary descriptions do not constitute a limitation on the embodiments. Elements bearing the same reference signs in the accompanying drawings represent similar elements.
FIG. 1 is a schematic structural diagram of a secondary battery according to some embodiments of the present application;
FIG. 2 is a schematic diagram of a laminated structure of a first electrode sheet, a separator, and a second electrode sheet according to some embodiments of the present application;
FIG. 3 is an exploded view of a first electrode sheet according to some embodiments of the present application;
FIG. 4 is a schematic structural diagram of a first electrode sheet according to some embodiments of the present application;
FIG. 5 is a schematic diagram of a laminated structure of a first electrode sheet, a separator, and a second electrode sheet according to some embodiments of the present application;
FIG. 6 is an exploded view of a first electrode sheet according to some embodiments of the present application;
FIG. 7 is a schematic diagram of a laminated structure of a first electrode sheet, a separator, and a second electrode sheet according to some embodiments of the present application;
FIG. 8 is a schematic diagram of a laminated structure of a first electrode sheet, a separator, and a second electrode sheet according to some embodiments of the present application;
FIG. 9 is a schematic structural diagram of a first tab according to some embodiments of the present application; and
FIG. 10 is a schematic structural diagram of a first tab (first surface) according to some embodiments of the present application.
Description of reference signs:
   100: secondary battery;
   10: housing;
   20: electrode assembly;
   21: first electrode sheet; 211: first current collector; 211a: first foil-free zone; 212: first active material layer; 2121: first groove; 213: second active material layer; 2131: first region;
   22: second electrode sheet; 221: second current collector; 222: third active material layer; 223: fourth active material layer; 2221: second region;
   23: separator;
   30: first tab; 30a: first surface; 30b: second surface; 30c: first protrusion; 30d: second protrusion; 30e: first recess; 31: first portion; 32: second portion;
   40: second tab;
   50: first adhesive layer;
   61: first insulating layer; 62: second insulating layer; 63: third insulating layer; 64: fourth insulating layer;
   Z: first direction; Y: second direction; and X: third direction.

### DETAILED DESCRIPTION

In order to make the purpose, technical solutions, and advantages of the embodiments of the present application more apparent, the technical solutions in the embodiments of the present application will be clearly described below in conjunction with the accompanying drawings in the embodiments of the present application. Obviously, the described embodiments are some of the embodiments of the present application, rather than all of the embodiments.

The mention of "embodiments" in the present application means that a specific feature, structure, or characteristic described in conjunction with the embodiment may be included in at least one embodiment of the present application. The appearance of the phrase in various positions in the description does not necessarily refer to the same embodiment, nor do such embodiments constitute independent or alternative embodiments mutually exclusive of other embodiments.

In the description of the embodiments of the present application, the technical terms "first", "second", and the like are only used to distinguish different objects, and cannot be understood as indicating or implying relative importance or implicitly indicating the number, specific order or priority relationship of the indicated technical features. In the description of the embodiments of the present application, the meaning of "plurality" is two or more, unless otherwise clearly and specifically limited.

In the description of the embodiments of the present application, the term "and/or" is only a description of an association relationship of associated objects, indicating that three relationships may exist. For example, A and/or B may mean: A exists alone, both A and B exist, and B exists alone. In addition, the character "/" in this document generally indicates that the associated objects before and after are in an "or" relationship.

The technical features involved in the different embodiments of the present application described below may be combined with each other as long as they do not conflict with each other.

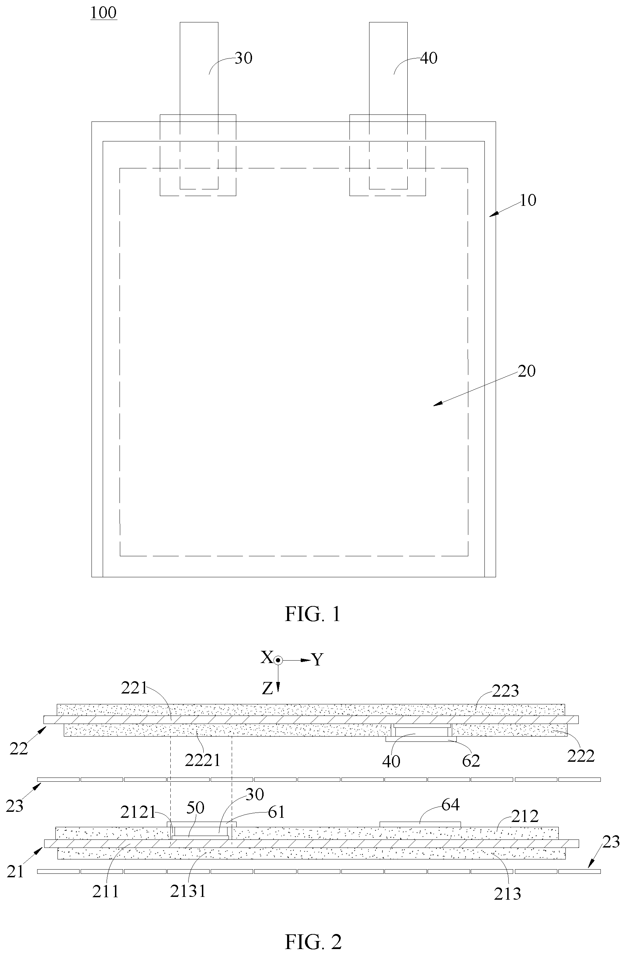

According to a first aspect, the present application provides a secondary battery 100. Referring to FIG. 1, the secondary battery 100 includes a housing 10, an electrode assembly 20, a first tab 30, and a second tab 40. The housing 10 may accommodate the electrode assembly 20 and an electrolyte (not shown in the figure). The electrolyte wets the electrode assembly 20 in the housing 10, thereby generating an electrochemical reaction. One end of the first tab 30 is connected to the electrode assembly 20 in the housing 10, and another end of the first tab 30 extends out of the housing 10. One end of the second tab 40 is connected to the electrode assembly 20 in the housing 10, and another end of the second tab 40 extends out of the housing 10. The first tab 30 and the second tab 40 may be used for extracting the positive electrode and the negative electrode of the secondary battery 100.

For the electrode assembly 20, referring to FIG. 2, the electrode assembly 20 includes a first electrode sheet 21, a second electrode sheet 22, and a separator 23. The first electrode sheet 21, the separator 23, and the second electrode sheet 22 are stacked and wound. FIG. 2 shows a laminated structure of the first electrode sheet 21, the second electrode sheet 22, and the separator 23. For example, they are stacked along a thickness direction (first direction Z) of the first electrode sheet 21 and wound along a length direction (second direction Y) thereof to form a wound electrode assembly 20. The separator 23 is disposed between the first electrode sheet 21 and the second electrode sheet 22 and is configured to insulate and separate the first electrode sheet 21 and the second electrode sheet 22. In some other embodiments, a plurality of first electrode sheets 21 and a plurality of second electrode sheets 22 may also be alternately stacked, and a separator 23 is disposed between adjacent first electrode sheets 21 and second electrode sheets 22, thereby forming a stacked electrode assembly 20.

The first electrode sheet 21 and the second electrode sheet 22 have opposite polarities. For example, the first electrode sheet 21 is a positive electrode sheet and the second electrode sheet 22 is a negative electrode sheet, or in some other embodiments, the first electrode sheet 21 is a negative electrode sheet and the second electrode sheet 22 is a positive electrode sheet. The first tab 30 is connected to the first electrode sheet 21. Current of the first electrode sheet 21 is collected and transmitted through the first tab 30. The second tab 40 is connected to the second electrode sheet 22. Current of the second electrode sheet 22 is collected and transmitted through the second tab 40, thereby extracting the positive and negative electrodes of the secondary battery 100.

Referring to FIG. 2, the first electrode sheet 21 includes a first current collector 211 and a first active material layer 212. The first current collector 211, as a conductive substrate of the first electrode sheet 21, may be a flat integral aluminum foil. The aluminum foil has high electrical conductivity and low resistance, which can improve the maximum charge and discharge rate of the secondary battery 100. In addition, the aluminum foil has a certain strength and ductility. In production processes such as winding or stacking, the aluminum foil is not prone to breakage or deformation, thereby ensuring the structural integrity of the first electrode sheet 21. In some other embodiments, the first current collector 211 may also be a titanium foil, a nickel foil, or a stainless steel foil.

The first active material layer 212 may be stacked on one surface of the first current collector 211 in the thickness direction (first direction Z). The first active material layer 212 includes a positive electrode active material, a conductive agent, and a binder. The above material components are mixed, stirred evenly, and coated on a surface of the first current collector 211, thereby obtaining the first active material layer 212. The positive electrode active material includes one or more of lithium nickel cobalt manganese oxide, lithium cobalt oxide, lithium iron phosphate, lithium nickel cobalt manganese oxide, lithium manganese oxide, or lithium manganese iron phosphate. Optionally, the first electrode sheet 21 further includes a second active material layer 213. The second active material layer 213 is stacked on the other surface of the first current collector 211 in the thickness direction (first direction Z) to form a double-sided coating structure. The second active material layer 213 may be provided similarly to the first active material layer 212.

Referring to FIG. 2, the second electrode sheet 22 includes a second current collector 221 and a third active material layer 222. The second current collector 221, as a conductive substrate of the second electrode sheet 22, may be a flat integral copper foil. The copper foil has high electrical conductivity and low resistance, which can improve the maximum charge and discharge rate of the secondary battery 100. In addition, the copper foil has a certain strength and ductility. In production processes such as winding or stacking, the copper foil is not prone to breakage or deformation, thereby ensuring the structural integrity of the second electrode sheet 22. In some other embodiments, the second current collector 221 may also be a titanium foil, a nickel foil, a stainless steel foil, or a silver foil.

The third active material layer 222 may be stacked on one surface of the second current collector 221 in the thickness direction (first direction Z). The third active material layer 222 includes a negative electrode active material, a conductive agent, and a binder. Such materials are mixed, stirred evenly, and coated on the surface of the second current collector 221, thereby obtaining the third active material layer 222. The negative electrode active material includes one or more of graphite, soft carbon, hard carbon, elemental silicon, silicon-carbon compounds, silicon oxide compounds, silicon alloys, and the like. Optionally, the second electrode sheet 22 further includes a fourth active material layer 223. The fourth active material layer 223 is stacked on the other surface of the second current collector 221 in the thickness direction (first direction Z) to form a double-sided coating structure. The fourth active material layer 223 may be provided similarly to the third active material layer 222.

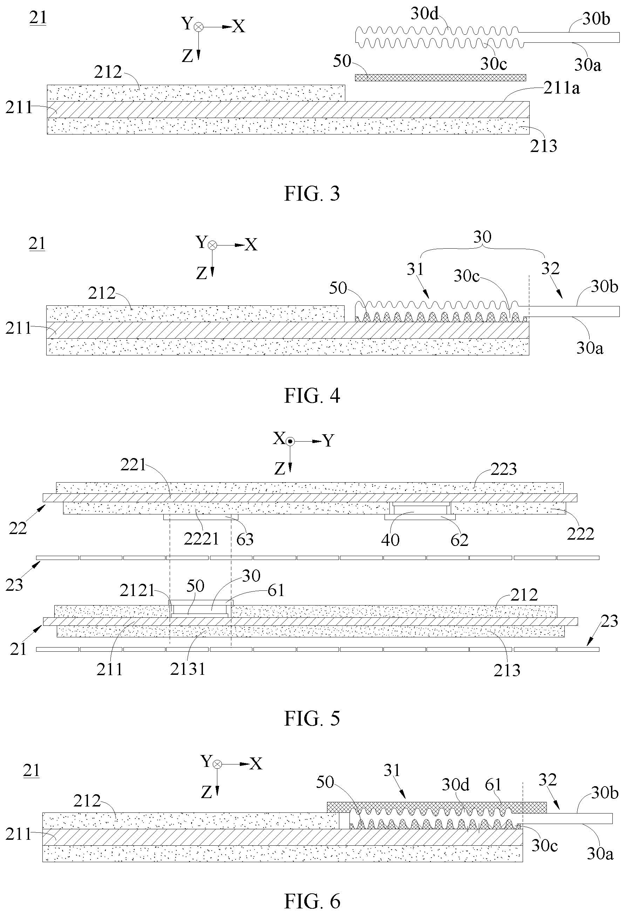

For the first tab 30, referring to FIG. 3 and FIG. 4, the first current collector 211 is provided with a first foil-free zone 211a (where the first active material layer 212 is not provided). The first tab 30 includes a first portion 31 and a second portion 32 that are connected to each other. The first portion 31 is disposed on the first foil-free zone 211a. The second portion 32 extends out of the first electrode sheet 21. For example, the second portion 32 extends out of the first electrode sheet 21 along a width direction (third direction X) of the first electrode sheet 21.

Referring to FIG. 3 and FIG. 4, in some embodiments, the secondary battery 100 further includes a first adhesive layer 50. Along the first direction Z, the first adhesive layer 50 is bonded between the first tab 30 and the first foil-free zone 211a. The first tab 30 includes a first surface 30a and a second surface 30b that are oppositely arranged. The first surface 30a faces the first foil-free zone 211a. The first surface 30a of the first portion 31 is provided with a plurality of first protrusions 30c. The first adhesive layer 50 is partially embedded between two adjacent first protrusions 30c. The second surface 30b of the first portion 31 is provided with a plurality of second protrusions 30d. Along the first direction Z, projections of at least one of the second protrusions 30d at least partially overlap with projections of the first protrusions 30c. The projections of the second protrusions 30d at least partially overlap with the projections of the first protrusions 30c, which means that a part of the projection of one of the second protrusions 30d overlaps with the projection of one of the first protrusions 30c. In some other embodiments, projections of at least one of the second protrusions 30d are located between projections of two adjacent first protrusions 30c.

In the embodiments of the present application, the first tab 30 is adhesively fixed to the first foil-free zone 211a through the first adhesive layer 50, with no welding burrs generated, which can reduce the risk that burrs pierce the separator 23 and cause a short circuit due to contact between the positive electrode and the negative electrode, thereby improving the safety performance of the secondary battery 100. Moreover, there is no need to provide an insulating layer on the first active material layer 212 to cover welding burrs (during welding, high temperature or high-frequency vibration may cause molten metal to splash, forming sharp welding burrs, which require a larger-sized insulating layer to cover). This can reduce the space occupied by the insulating layer and facilitate the full utilization of the first active material layer 212, thereby improving the energy density of the secondary battery 100 while reducing costs. Furthermore, the adhesive bonding process is relatively simple and does not require complex welding equipment (for example, no welding head or welding base is required) or professional welding technicians. Compared with traditional welding processes, the adhesive bonding process can eliminate steps such as pre-welding preparation, equipment commissioning, and strict inspection of welding quality during welding. The first protrusions 30c on the surface of the first tab 30 are embedded into the first adhesive layer 50 by pressing with a pressing block, so that the first tab 30 is adhesively fixed to the first current collector 211. The process is simpler, which helps to improve the production efficiency of the secondary battery 100 and reduce production costs.

In addition, the arrangement of the first protrusions 30c allows the first adhesive layer 50 to be partially embedded between two adjacent first protrusions 30c, which helps to fill the tiny gaps between the first tab 30 and the first foil-free zone 211a, increases the bonding area between the first adhesive layer 50 and the first tab 30, and enhances the connection strength between the first tab 30 and the first current collector 211.

In addition, along the first direction Z, the projections of at least one of the second protrusions 30d at least partially overlap with the projections of the first protrusions 30c. When the first tab 30 and the first current collector 211 are press-bonded and bonded to each other, the second protrusions 30d and the first protrusions 30c may form an opposing structure in the vertical direction during press-bonding. The projection overlapping region will produce a pressure superposition effect, which concentrates the instantaneous pressure when the first protrusions 30c pierce the first adhesive layer 50. This allows the first protrusions 30c to pierce the first adhesive layer 50 easily, so as to realize direct contact and electrical connection between the first protrusions 30c and the first current collector 211, and mitigate the unsatisfactory piercing effect caused by unilateral force.

Furthermore, along the first direction Z, the projections of at least one of the second protrusions 30d are located between the projections of two adjacent first protrusions 30c. When the first tab 30 and the first current collector 211 are press-bonded and bonded to each other, the positions of the second protrusions 30d are exactly positioned in the space between two adjacent first protrusions 30c, and squeeze the first adhesive layer 50 between the two first protrusions 30c. The first adhesive layer 50 thus fully fills the tiny gaps between two adjacent first protrusions 30c and the gaps between the first tab 30 and the first current collector 211, which reduces bubble residue and further enhances the bonding strength.

The first adhesive layer 50 may be hot-melt adhesive, thermosetting adhesive, or pressure-sensitive adhesive. For example, when the first adhesive layer 50 is a hot-melt adhesive, when the first tab 30 and the first current collector 211 are hot-pressed, the first adhesive layer 50 may fill the concave-convex structure on the first tab 30 and then may be cooled and solidified in a short time to achieve bonding with the first current collector 211. Alternatively, when the first adhesive layer 50 is a thermosetting adhesive, the cured first adhesive layer 50 has high strength and hardness, which can prevent damage and tearing of the first tab 30 and can adapt to the high-temperature environment at the first tab 30. Alternatively, when the first adhesive layer 50 is a pressure-sensitive adhesive, there is no need for heating, solvent activation, or a complex curing procedures. Bonding can be realized by applying only light pressure. This type of adhesive features simple and fast operation and is suitable for bonding the concave-convex structure of the first tab 30.

The first adhesive layer 50 may be a non-conductive adhesive. The first adhesive layer 50 may be made of materials such as epoxy resin, acrylate, or silicone rubber. In this case, at least one of the first protrusions 30c are in direct contact with the first foil-free zone 211a, thereby realizing contact electrical connection between the first protrusions 30c and the first foil-free zone 211a, forming a metal-metal solid-state current transmission channel, and reducing contact resistance.

In some other embodiments, the first adhesive layer 50 may alternatively be a conductive adhesive. For example, conductive particles such as silver, copper, nickel, aluminum, graphite, or carbon nanotubes are added to the first adhesive layer 50, or the first adhesive layer 50 directly uses a metal adhesive (such as solder paste and copper paste) to form a conductive network inside the first adhesive layer 50. When the first protrusions 30c of the first tab 30 pierce the first adhesive layer 50, the conductive particles or metal adhesive directly bridge the first tab 30 and the first current collector 211. At the same time, the conductive network of the first adhesive layer 50 compensates for the microscopic gaps of mechanical contact, which helps to reduce resistance and improving the current-carrying capacity of the secondary battery 100.

In some embodiments, referring to FIG. 2, the first active material layer 212 is provided with a first groove 2121. For example, a part of the first active material layer 212 is removed by processes such as laser cleaning or foaming adhesive, so that the first current collector 211 is partially exposed, thereby forming the first foil-free zone 211a. In the embodiments of the present application, the first current collector 211 is partially exposed at the first groove 2121 and forms the first foil-free zone 211a. The first portion 31 of the first tab 30 is disposed in the first groove 2121. The second active material layer 213 is disposed on a surface of the first current collector 211 facing away from the first active material layer 212. Along the thickness direction of the first current collector 211 (along the first direction Z), a projection of the second active material layer 213 overlaps with the first groove 2121, so that the projection of the second active material layer 213 covers the first groove 2121.

Traditional welding processes require another groove to be provided at a position of the second active material layer 213 corresponding to the first groove 2121, so that a part of the second active material layer 213 is removed, and the second current collector 221 also forms a foil-free zone. The foil-free zone is used to place a welding head or welding base for welding. The adhesive tab structure of the present application does not require a welding head or a welding base. The second active material layer 213 does not need to be provided with any groove. The structure of the second active material layer 213 is more complete, which increases the proportion of active material and improves the energy density of the secondary battery 100.

Referring to FIG. 2, a surface of the second active material layer 213 facing away from the first active material layer 212 is stacked with the separator 23. The second active material layer 213 includes a first region 2131. Along the thickness direction of the first current collector 211 (first direction Z), a projection of the first region 2131 coincides with the first groove 2121, and a surface of the first region 2131 facing away from the first current collector 211 is in direct contact with the separator 23.

The first region 2131 is a region of the second active material layer 213 corresponding to the first groove 2121. Since the adhesive tab structure is adopted in the present application, there is no need to clean the first region 2131 to form a foil-free zone for welding. There are no weld marks or welding burrs. The first region 2131 does not need to be provided with any insulating layer to cover the welding burrs. This not only reduces the space occupied by the insulating layer and improves energy density, but also enables the first region 2131 to be in direct contact with the separator 23, so that lithium ions can migrate between the first region 2131 and the second electrode sheet 22, which facilitates the full utilization of the second active material layer 213 and improves the energy density of the secondary battery 100.

In some embodiments, the first electrode sheet 21 is taken as a negative electrode sheet and the second electrode sheet 22 is taken as a positive electrode sheet as an example. Referring to FIG. 5, along the first direction Z, the separator 23 is stacked between the first electrode sheet 21 and the second electrode sheet 22. A surface of the second current collector 221 facing the first active material layer 212 is stacked with the third active material layer 222. The third active material layer 222 includes a second region 2221. Along the first direction Z, a projection of the second region 2221 coincides with the first groove 2121. Since the first active material layer 212 is provided with the first groove 2121, a part of the negative electrode active material is missing. In order to enable the negative electrode active material layer (first active material layer 212) to have enough margin to accommodate lithium ions released from the positive electrode active material layer (third active material layer 222), a third insulating layer 63 needs to be provided on the third active material layer 222 to cover the second region 2221, which can reduce the participation of the second region 2221 in the intercalation and deintercalation reactions of lithium ions and reduce the occurrence of lithium precipitation.

In some other embodiments, the first electrode sheet 21 is taken as a positive electrode sheet and the second electrode sheet 22 is taken as a negative electrode sheet as an example. Referring to FIG. 2, along the first direction Z, an orthogonal projection of the second region 2221 coincides with the first groove 2121, and a surface of the second region 2221 facing the first groove 2121 is in direct contact with the separator 23. Since the first active material layer 212 is a positive electrode active material layer, the partial loss of the first active material layer 212 will not cause lithium precipitation. Therefore, the second region 2221 does not need to be provided with any third insulating layer 63. This not only reduces the space occupied by the third insulating layer 63 and improves the energy density of the secondary battery 100, but also enables the second region 2221 to be in direct contact with the separator 23, that is, the second region 2221 can directly participate in electrochemical reactions, which facilitates the full utilization of the third active material layer 222 and improves the energy density of the secondary battery 100.

In some embodiments, referring to FIG. 6, a second surface 30b of the first portion 31 is provided with a first insulating layer 61. The first insulating layer 61 is partially embedded between two adjacent second protrusions 30d, and the first insulating layer 61 is bonded to the second protrusions 30d. The first insulating layer 61 may cover burrs on the first tab 30 (including the first portion 31 and a part of the second portion 32) (for example, when the first tab 30 is formed by cutting and the first tab 30 is not surface-treated, the first tab 30 may have some cutting burrs), which can reduce the risk that burrs pierce the separator 23 and cause a short circuit between the positive electrode and the negative electrode. The first insulating layer 61 is partially embedded between adjacent second protrusions 30d, which helps to form a tooth-like interlocking structure. When the first insulating layer 61 is pulled by an external force, the second protrusions 30d can engage the first insulating layer 61, enhancing the bonding strength between the two and reducing relative slippage between the first insulating layer 61 and the first tab 30. At the same time, the arrangement of the second protrusions 30d increases the bonding area between the first tab 30 and the first insulating layer 61, which may form an anchoring structure and reduce the risk of the first insulating layer 61 falling off.

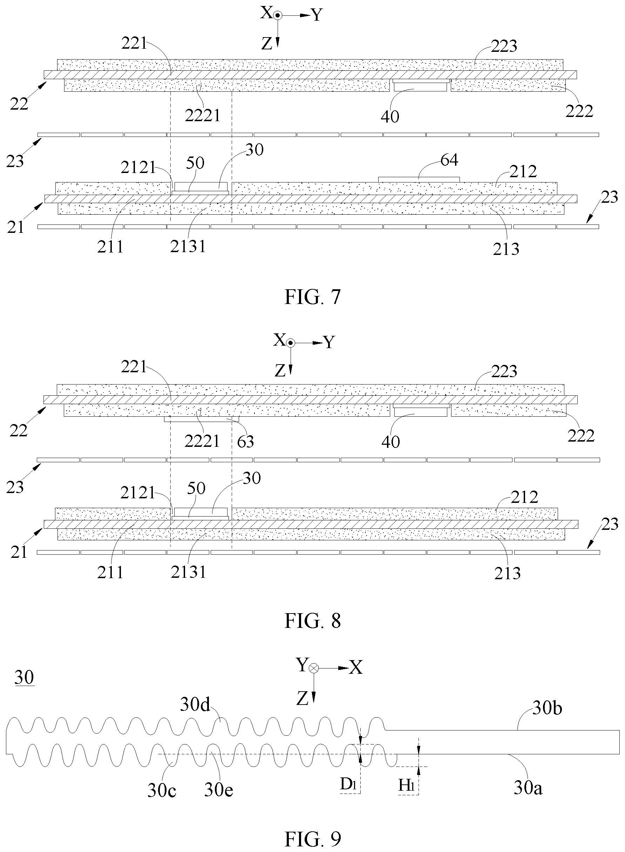

When the first electrode sheet 21 is used as a positive electrode sheet, it can be understood that after the first tab 30 is surface-treated and the cutting burrs on the first tab 30 are removed, there is no need to provide the first insulating layer 61 on the first tab 30. For example, referring to FIG. 7 (which may also refer to FIG. 2), there is no longer an insulating layer between the first tab 30 and the second region 2221, which helps to improve the energy density of the secondary battery 100. When the second tab 40 is also provided similarly to the first tab 30, there is no need to provide the second insulating layer 62 on the second tab 40 either, that is, only a fourth insulating layer 64 is provided between the second tab 40 and the first active material layer (the fourth insulating layer 64 acts as a lithium precipitation protection adhesive), which can further improve the energy density of the secondary battery 100.

When the first electrode sheet 21 is used as a negative electrode sheet, it can be understood that after the first tab 30 is surface-treated and the cutting burrs on the first tab 30 are removed, there is no need to provide the first insulating layer 61 on the first tab 30 either. For example, referring to FIG. 8 (which can also refer to FIG. 5), only the second region 2221 is provided with the third insulating layer 63 (the third insulating layer 63 acts as a lithium precipitation protection adhesive). When the second tab 40 is also provided similarly to the first tab 30, there is no need to provide the second insulating layer 62 on the second tab 40 either, and there is no longer an insulating layer between the second tab 40 and the first active material layer, which can further improve the energy density of the secondary battery 100.

For the shape of the first protrusions 30c, stamping, upsetting, or laser processing can be used to form the first protrusions 30c on the first tab 30. In some embodiments, referring to FIG. 9, along a direction from the first portion 31 to the first foil-free zone 211a (first direction Z), a width of the first protrusions 30c in the second direction Y or the third direction X is set to decrease, so that the first protrusions 30c form a structure wider at the top and narrower at the bottom, which can reduce the piercing resistance of the first protrusions 30c, so that the first protrusions 30c easily pierce the first adhesive layer 50 and realize direct contact and electrical connection with the first current collector 211. A stable metal-metal electrical connection channel may be formed without applying high pressure or performing precise alignment, thereby reducing contact resistance.

In some embodiments, referring to FIG. 9, the first protrusions 30c protrude relative to the first surface 30a. The first surface 30a is further provided with a plurality of first recesses 30e. The first recesses 30e are recessed relative to the first surface 30a. The first adhesive layer 50 is embedded in the first recesses 30e. The first protrusions 30c pierce the adhesive layer to form anchoring points, while the first recesses 30e are filled with the first adhesive layer 50 to form reverse slots, and the two structures jointly constitute a three-dimensional mechanical interlocking structure. Furthermore, the presence of the first recesses 30e provides additional adhesive storage space for the first adhesive layer 50. Particularly during press-bonding of the first tab 30 and the first current collector 211, the first adhesive layer 50 preferentially fills the recesses after being squeezed, and then the first adhesive layer 50 flows to the periphery of the first protrusions 30c, which facilitates direct contact and electrical connection between the first protrusions 30c and the first current collector 211. At the same time, the first recesses 30e further increase the contact between the first tab 30 and the first adhesive layer 50, so that the connection strength between the first tab 30 and the first current collector 211 is further enhanced.

For the height of the first protrusions 30c, in some embodiments, along the first direction Z, a height of the first protrusions 30c is H₁ (relative to the first surface 30a), with 10 µm≤H₁≤30 µm. Any value from 10 µm to 30 µm may be adopted, for example, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, or 30 µm. This helps to increase a bonding area between the first tab 30 and the first adhesive layer 50, enhance the bonding strength between the first tab 30 and the first current collector 211, lower the press-bonding damage caused by the first protrusions 30c to the first current collector 211, and reduce the material loss of the first adhesive layer 50.

For the depth of the first recesses 30e, a depth of the first recesses 30e is D₁, with 5 µm≤D₁≤30 µm. Any value from 5 µm to 30 µm may be adopted, for example, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, or 30 µm. This helps to improve the mechanical anchoring effect between the first tab 30 and the first adhesive layer 50, enhance the connection strength between the first tab 30 and the first current collector 211, reduce the waste of the first adhesive layer 50 material, and lessen the impact on the strength of the first tab 30.

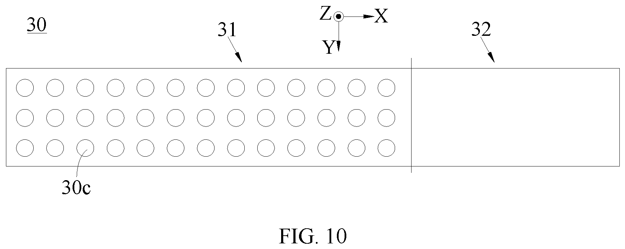

In some embodiments, referring to FIG. 10, when observed along the first direction Z, an area of the first surface 30a of the first portion 31 is S₁, and an area of all the first protrusions 30c is S₁₁, with 60%≤S₁₁/S₁≤80%. Any value from 60% to 80% may be adopted, for example, 60%, 61%, 62%, 63%, 64%, 65%, 66%, 67%, 68%, 69%, 70%, 72%, 74%, 76%, 78%, or 80%. This ensures sufficient electrical connection contact points between the first tab 30 and the first current collector 211, reduces contact resistance, and improves current transmission efficiency. Moreover, the planar or recessed region is greater than or equal to 20%, so that the first tab 30 may be bonded with a sufficient amount of the first adhesive layer 50. This makes the connection between the first tab 30 and the first current collector 211 more stable and avoids the first tab 30 from loosening due to vibration or electrode sheet swelling.

In some other embodiments, when observed along the first direction Z, an area of the first surface 30a of the first portion 31 is S₁, and an area of all the first recesses 30e is S₁₂, with 20%≤S₁₂/S₁≤40%. Any value from 20% to 40% may be adopted, for example, 20%, 21%, 22%, 23%, 24%, 25%, 26%, 27%, 28%, 29%, 30%, 32%, 34%, 36%, 38%, or 40%. When the proportion of the first recesses 30e S₁₂/S₁ is greater than or equal to 20%, the embedding amount of the first adhesive layer 50 is sufficient to enhance the connection strength between the first tab 30 and the first current collector 211. When S₁₂/S₁ is less than or equal to 40%, a relatively large area is still retained for direct contact between the first protrusions 30c and the first current collector 211, so the conductive performance can be improved while the bonding strength is enhanced.

In some other embodiments, the first surface 30a of the first portion 31 may further include a region (planar region) in which neither the first protrusions 30c nor the first recesses 30e are disposed. For example, an area of the region where neither the first protrusions 30c nor the first recesses 30e are provided is S₁₃, and S₁₃/S₁ is less than 5%, which helps to reduce contact resistance while enhance connection strength.

According to a second aspect, the present application further provides an electronic device, including the secondary battery 100 according to any embodiment of the first aspect described above. The electronic device of the embodiments of the present application is not particularly limited, and it may be any electronic device known in the prior art. For example, the electronic device includes but is not limited to Bluetooth headsets, mobile phones, tablets, laptop computers, electric toys, electric tools, electric bicycles, electric vehicles, ships, and spacecraft. The electric toys may include fixed or mobile electric toys, such as game consoles, electric car toys, electric boat toys, and electric airplane toys. The spacecraft may include airplanes, rockets, space shuttles, spaceships, and the like.

### Example 1

### <Preparation of first electrode sheet>:

The first electrode sheet is a positive electrode sheet. A positive electrode active material lithium cobalt oxide (LiCoO₂), carbon black (Super P), and polyvinylidene fluoride (PVDF) were mixed in a weight ratio of 97.5:1.0:1.5. N-methylpyrrolidone (NMP) was added as a solvent to prepare a positive electrode slurry with a solid content of 75wt%, and the mixture was stirred evenly. An aluminum foil with a thickness of 12 µm was selected as the first current collector. The above positive electrode slurry was applied onto a surface of the first current collector and dried to obtain a first active material layer. The above slurry was applied onto the other surface of the first current collector and dried to obtain a second active material layer, thereby obtaining a first electrode sheet with double-sided coating of the positive electrode active material layer. The length of the first electrode sheet was 695.5 mm, the width was 92.1 mm, and the thickness of the first active material layer or the second active material layer was 34.5 µm.

### <Preparation of second electrode sheet>:

The second electrode sheet was a negative electrode sheet. Graphite was used as a negative electrode active material. The negative electrode active material graphite, a binder styrene-butadiene rubber (SBR), and a thickener sodium carboxymethyl cellulose (CMC) were mixed in a weight ratio of 96:2:2. Deionized water was added as a solvent to prepare a negative electrode slurry with a solid content of 70wt%, and the mixture was stirred evenly. A copper foil with a thickness of 6 µm was selected as the second current collector. The above negative electrode slurry was applied onto a surface of the second current collector and dried to obtain a third active material layer. The above negative electrode slurry was applied onto the other surface of the second current collector and dried to obtain a fourth active material layer, thereby obtaining a second electrode sheet with double-sided coating of the negative electrode active material layer. The length of the second electrode sheet was 699.5 mm, the width was 93.4 mm, and the thickness of the third active material layer or the fourth active material layer was 43.5 µm.

### <Preparation of separator>:

A polyethylene porous film was used as a base material layer. A ceramic layer containing alumina ceramic and PVDF binder were applied onto one side surface of the base material layer to serve as a separator (CCS), where the mass percentage content of alumina ceramic in the ceramic layer was 95%.

### <Preparation of electrolyte>:

In a dry argon atmosphere, ethylene carbonate (EC), ethyl methyl carbonate (EMC), and diethyl carbonate (DEC) were first mixed in a mass ratio of EC:EMC:DEC=30:50:20 to form a base organic solvent. Then a lithium salt lithium hexafluorophosphate (LiPF₆) was added to the base organic solvent, dissolved and mixed evenly to obtain an electrolyte with a LiPF₆ mass concentration of 12.5%.

### <Preparation of secondary battery>:

A first groove was formed on the first active material layer through cleaning. A first surface of the first tab was provided with first protrusions, and a second surface was provided with second protrusions. The first tab was bonded to the first current collector in the first groove by press-bonding. A height H₁ of the first protrusions was 20 µm (no first recesses are provided), and an area proportion S₁₁/S₁ of all the first protrusions on the first surface of the first portion was 70%. After the second current collector was connected to the second tab, the first electrode sheet, the separator, and the second electrode sheet were stacked according to FIG. 7 and wound to obtain an electrode assembly. The electrode assembly was placed in an aluminum-plastic film packaging bag. After drying, an electrolyte was injected. The secondary battery was obtained through processes such as vacuum packaging, standing, formation, capacity grading, degassing, and edge trimming.

Different from Example 1, relevant parameters in Examples 2 to 23 and Comparative Examples 1 and 2 are presented in Table 1 below. In Comparative Example 1, welding was adopted to connect the first tab to the first current collector, and insulating layers were arranged on both sides of the positive electrode tab and the negative electrode tab to cover welding burrs. In Comparative Example 2, bonding was adopted to connect the first tab to the first current collector, and conductive particles such as copper, nickel, aluminum, graphite, or carbon nanotubes were added to the adhesive layer to enable electrical connection between the first tab and the first current collector. In Examples 11 to 23, the first surface of the first portion was further provided with first recesses.

### Test methods

**Energy density (VED) test method:** A secondary battery was charged to a cutoff voltage at a constant current of 1C, then charged to 0.05C at the cutoff voltage under constant voltage, and then discharged to a discharge cutoff voltage at a constant current of 0.2C. Discharge energy E was recorded. The external dimensions of the secondary battery were measured and its volume V was calculated. The energy density W was calculated as W=E/V.

It can be understood that 1C, 0.05C, and 0.2C are calculated based on the capacity specified in the battery factory outer packaging.

**Sampling method for samples in tab region:** At 25°C, A lithium-ion battery was discharged to a discharge cutoff voltage at a constant current of 0.5C.The lithium-ion battery was disassembled under an argon atmosphere, and the positive electrode sheet or negative electrode sheet was soaked in dimethyl carbonate solvent for 2h, then dried at 60°C for 1h to obtain the positive electrode sheet or negative electrode sheet. The discharge cutoff voltages of the lithium-ion batteries in the examples and comparative examples of the present application were 3.0 V. It can be understood that when the voltage range marked on the factory battery outer packaging is 3.0 V to 4.5 V, the charge cutoff voltage is 4.5 V and the discharge cutoff voltage is 3.0 V. The lithium-ion battery used as an example in the present application had a charge cutoff voltage of 4.5 V and a discharge cutoff voltage of 3.0 V.

The sampling method is as follows:
The metallographic preparation process with adhesive filling is as follows:

### (1) Sample cutting

The target region was cut out, and the tab region was trimmed with a ceramic knife.

### (2) Cold mounting treatment

Epoxy resin (EpoFix) or acrylic resin (model such as Buehler SimpliFix) was selected. The resin and curing agent were mixed in a ratio of 2:1 (epoxy system). The mixture was held at a vacuum of -0.08 MPa for 15 minutes to remove air bubbles, and then cured at room temperature for 24 hours or subjected to accelerated curing at 60°C for 1 hour.

### (3) Grinding and polishing

After trimming to the corresponding position to be observed, grinding was carried out using sandpaper in sequence 180#→400#→800#→1200#→2000# (silicon carbide sandpaper). A pressure of 10N to 15N was applied in each mesh stage. Polishing was performed in the following sequence: 9 µm diamond suspension + nylon cloth (5 min)→3 µm alumina polishing liquid + flannel (3 min)→0.05 µm silica sol + synthetic fiber cloth (1 min).

### (4) Microscopic observation

A metallographic microscope with an objective lens of 50× to 1000× was used for observation or a scanning electron microscopy was adopted for analysis. Gold sputtering could be performed according to requirements.

**Measurement of resistance R between first tab and first current collector:** For the internal resistance test, a P90407 voltage internal resistance tester equipped with a built-in resistance meter was selected for measurement. The equipment range was set to 100 mΩ, the resistance test speed was set to FAST, and the resistance measurement current was set to LOW. Test point 1 (an end of the tab extending out of the first current collector) and test point 2 (a side connected to the current collector and away from the extension end) were selected at two ends of the tab for testing.

**Measurement of press-bonding pressure Fₐ:** When the first tab and the first current collector were press-bonded, a pressure sensor was mounted between the pressure head of the hot-pressing equipment and the driving mechanism to directly measure the applied axial pressure.

**Measurement of peel strength f between first tab and first current collector:** A UTM6202 Gotech tensile machine (Shenzhen Suns Technology Co., Ltd.) was selected for measurement. The electrode sheet was cut, leaving only the tab and current collector in the groove region were retained as the test samples. The tab and current collector on the sealant side of the sample were manually peeled apart by about 5 mm. The peeled part of the tab and current collector were placed at an angle of 180°, clamped by the upper and lower fixtures of the tensile machine. The peel strength speed was set to 50 mm/min. Peel strength was initiated. The test curve and average force were output. The value of the average force was taken as the measured peel strength.

**Table 1**

| | Tab connection | Whether first protrusions are arranged | Projections of at least one of second protrusions at least partially overlap with projections of first protrusions | Projections of at least one of second protrusions are located between two adjacent first protrusions | H₁ (µm) | D₁ (µm) | S₁₁/S₁ | Resistance R (mΩ) | Peel strength F (N/mm) | Press-bonding pressure Fₐ (kgf) | VED (Wh/L) |
|---|---|---|---|---|---|---|---|---|---|---|---|
| Comparative Example 1 | Welding | No | / | / | / | / | / | 6 | 0.05 | / | 700 |
| Comparative Example 2 | Bonding | No | / | / | / | / | 100% | 14 | 0.04 | / | 720 |
| Example 1 | Bonding | Yes | Yes | No | 20 | / | 70% | 3.2 | 0.1 | 0.3 | 720 |
| Example 2 | Bonding | Yes | No | Yes | 20 | / | 70% | 3.2 | 0.12 | 0.7 | 720 |
| Example 3 | Bonding | Yes | Yes | Yes | 20 | / | 70% | 3.2 | 0.14 | 0.3 | 720 |
| Example 4 | Bonding | Yes | Yes | Yes | 8 | / | 70% | 5.8 | 0.09 | 0.6 | 720 |
| Example 5 | Bonding | Yes | Yes | Yes | 10 | / | 70% | 4.7 | 0.1 | 0.5 | 720 |
| Example 6 | Bonding | Yes | Yes | Yes | 13 | / | 70% | 4.2 | 0.12 | 0.4 | 720 |
| Example 7 | Bonding | Yes | Yes | Yes | 15 | / | 70% | 3.5 | 0.13 | 0.3 | 720 |
| Example 8 | Bonding | Yes | Yes | Yes | 25 | / | 70% | 2.9 | 0.15 | 0.3 | 720 |
| Example 9 | Bonding | Yes | Yes | Yes | 30 | / | 70% | 2.5 | 0.16 | 0.2 | 720 |
| Example 10 | Bonding | Yes | Yes | Yes | 32 | / | 70% | 2.5 | 0.16 | 0.2 | 720 |
| Example 11 | Bonding | Yes | Yes | Yes | 20 | 4 | 70% | 3.4 | 0.16 | 0.3 | 720 |
| Example 12 | Bonding | Yes | Yes | Yes | 20 | 5 | 70% | 3.4 | 0.18 | 0.3 | 720 |
| Example 13 | Bonding | Yes | Yes | Yes | 20 | 7 | 70% | 3.4 | 0.19 | 0.3 | 720 |
| Example 14 | Bonding | Yes | Yes | Yes | 20 | 10 | 70% | 3.4 | 0.2 | 0.3 | 720 |
| Example 15 | Bonding | Yes | Yes | Yes | 20 | 15 | 70% | 3.4 | 0.21 | 0.3 | 720 |
| Example 16 | Bonding | Yes | Yes | Yes | 20 | 20 | 70% | 3.4 | 0.23 | 0.3 | 720 |
| Example 17 | Bonding | Yes | Yes | Yes | 20 | 25 | 70% | 3.4 | 0.25 | 0.3 | 720 |
| Example 18 | Bonding | Yes | Yes | Yes | 20 | 30 | 70% | 3.4 | 0.27 | 0.3 | 720 |
| Example 19 | Bonding | Yes | Yes | Yes | 20 | 32 | 70% | 3.4 | 0.27 | 0.3 | 720 |
| Example 20 | Bonding | Yes | Yes | Yes | 20 | 10 | 55% | 6.8 | 0.31 | 0.2 | 720 |
| Example 21 | Bonding | Yes | Yes | Yes | 20 | 10 | 60% | 5.2 | 0.3 | 0.2 | 720 |
| Example 22 | Bonding | Yes | Yes | Yes | 20 | 10 | 80% | 2.6 | 0.16 | 0.5 | 720 |
| Example 23 | Bonding | Yes | Yes | Yes | 20 | 10 | 85% | 2.4 | 0.13 | 0.6 | 720 |

According to the above Table 1, in combination with Examples 1 to 23 and Comparative Examples 1 and 2, it can be seen that in Examples 1 to 23, contact resistance can be effectively reduced, the peel strength of the first tab and the current collector can be enhanced, and energy density can be improved. In Examples 1 to 23, the first tab was adhesively fixed to the first foil-free zone through the first adhesive layer, so there is no need to provide an insulating layer on the first active material layer to cover welding burrs. This reduces the space occupied by the insulating layer and facilitates the full utilization of the first active material layer, thereby improving the energy density of the secondary battery while reducing costs. In addition, the arrangement of the first protrusions allows the first adhesive layer to be partially embedded between two adjacent first protrusions, which helps to fill the tiny gaps between the first tab and the first foil-free zone, increase the bonding area between the first adhesive layer and the first tab, and enhance the connection strength between the first tab and the first current collector. In addition, the projections of some of the second protrusions at least partially overlap with the projections of the first protrusions. When the first tab and the first current collector were press-bonded, the second protrusions and the first protrusions could form an upper-lower opposing structure. The projection overlapping region will produce a pressure superposition effect, which concentrates the instantaneous pressure when the first protrusions pierce the first adhesive layer. This allows the first protrusions to pierce the first adhesive layer easily, thereby facilitating direct contact and electrical connection between the first protrusions and the first current collector. Furthermore, the projections of some of the second protrusions are located between the projections of two adjacent first protrusions. When the first tab and the first current collector are press-bonded, the positions of the second protrusions are exactly positioned in the space between two adjacent first protrusions, and squeeze the first adhesive layer between the two first protrusions. The first adhesive layer thus fully fills the tiny gaps between two adjacent first protrusions and the gaps between the first tab and the first current collector, which reduces bubble residue and further enhances the bonding strength.

In combination with Examples 4 to 10, in Example 4, the height of the first protrusions H₁ is small, and the effect on improving the bonding force between the first adhesive layer and the first tab is weak. Furthermore, after the first protrusions pierce the first adhesive layer, the first protrusions may be difficult to reach the first current collector, making it difficult to achieve contact electrical connection with the first current collector, or the number of contact points is too small, resulting in a weak effect on reducing resistance. In Example 10, H₁ is large. When the first tab and the first current collector were press-bonded, the first protrusions might excessively squeeze the first current collector, requiring high-precision control to mitigate the impact of excessive squeezing. At the same time, when the height H₁ of the first protrusions is large, the gap space between the first surface and the first foil-free zone is large, which is unfavorable for enhancing the bonding strength. In combination with Examples 5 to 9, 10 µm≤H₁≤30 µm may be adopted. This helps to increase the bonding area between the first tab and the first adhesive layer, enhances the peel strength between the first tab and the first current collector, lowers the press-bonding damage of the first protrusions to the first current collector, and reduces the pressure during press-bonding. In addition, in Examples 5 to 9, as the height H₁ of the first protrusions increases, the resistance R also gradually decreases. A larger height of the first protrusions makes it easier to pierce the first adhesive layer and then achieve direct contact with the first foil-free zone, which effectively reduces resistance. In Example 10, the height of the first protrusions is large. Compared with Example 9, its resistance is almost unchanged. Continuing to increase H1 on the basis of Example 9 brings little improvement on reducing resistance. In Example 4, the height H₁ of the first protrusions is small, so it is difficult to achieve contact electrical connection with the first current collector, or the number of contact points is insufficient, resulting in a weak effect on reducing resistance.

In combination with Examples 11 to 19, it can be seen that when first recesses are arranged on the first tab, the bonding strength can be further enhanced. The first protrusions pierce the adhesive layer to form anchoring points, while the first recesses are filled with the first adhesive layer to form reverse slots. The two structures jointly form a three-dimensional mechanical interlocking structure, which can enhance the peel strength between the first tab and the first current collector. In Example 11, the depth of the first recesses is small, which may lead to insufficient surface roughness and weak physical anchoring effect between the first adhesive layer and the first surface. In Example 19, D₁ is large. The deeper first recesses require a large amount of adhesive for filling, which causes material waste. Furthermore, in Example 19, its performance in all aspects is similar to that of Example 18. In combination with Examples 12 to 18, 5 µm≤D₁≤30 µm may be adopted. This helps to improve the mechanical anchoring effect between the first tab and the first adhesive layer, enhances the connection strength between the first tab and the first current collector, reduces the waste of the first adhesive layer material, and lessens the impact on the strength of the first tab.

In combination with Examples 20 to 23, in Example 20, the area proportion S₁₁/S₁ of the first protrusions is small, and the effect on reducing resistance is weak. In Example 23, the proportion is large, so the filling amount of the first adhesive layer may be small, and the effect on improving peel strength is weak. In combination with Examples 21 and 22, 60%≤S₁₁/S₁≤80% may be adopted. This ensures sufficient electrical connection contact points between the first tab and the first current collector, reduces contact resistance, and improves current transmission efficiency. Moreover, the planar or recessed region is greater than or equal to 20%, so that the first tab 30 may be bonded with a sufficient amount of the first adhesive layer. This makes the connection between the first tab and the first current collector more stable and avoids the first tab from loosening due to vibration or electrode sheet swelling. Based on the same inventive concept, for the area proportion of the first recesses, 20%≤S₁₂/S₁≤40% may be adopted.

Finally, it should be noted that the above embodiments are only used to illustrate the technical solutions of the present application, rather than to limit it. Under the idea of the present application, the technical features in the above embodiments or different embodiments can also be combined, and the steps can be implemented in any order. There are many other changes in different aspects of the present application as described above. For the sake of brevity, they are not provided in detail. Although the present application has been described in detail with reference to the foregoing embodiments, those of ordinary skill in the art should understand that they can still modify the technical solutions recorded in the foregoing embodiments, or equivalently replace some of the technical features. However, these modifications or replacements do not cause the essence of the corresponding technical solutions to deviate from the scope of the technical solutions of the embodiments of the present application.

## Claims

1. A secondary battery (100), comprising a first tab (30) and a first electrode sheet (21), wherein the first electrode sheet (21) comprises a first current collector (211) and a first active material layer (212);
along a first direction (Z), the first active material layer (212) is stacked on a surface of the first current collector (211), and the first direction (Z) is a thickness direction of the first electrode sheet (21); and the first current collector (211) is provided with a first foil-free zone (211a), the first tab (30) comprises a first portion (31) and a second portion (32) that are connected to each other, the first portion (31) is disposed on the first foil-free zone (211a), the second portion (32) extends out of the first electrode sheet (21);
the secondary battery (100) further comprises a first adhesive layer (50), wherein the first adhesive layer (50) is bonded between the first foil-free zone (211a) and the first portion (31);
the first tab (30) comprises a first surface (30a) and a second surface (30b) opposite to each other, the first surface (30a) faces the first foil-free zone (211a), the first surface (30a) of the first portion (31) is provided with a plurality of first protrusions (30c), and the first adhesive layer (50) is partially embedded between two adjacent first protrusions (30c);
the second surface (30b) of the first portion (31) is provided with a plurality of second protrusions (30d); and
along the first direction (Z), projections of at least one of the second protrusions (30d) satisfy at least partially overlap with projections of the first protrusions (30c), and/or projections of at least one of the second protrusions (30d) are located between projections of two adjacent first protrusions (30c).

2. The secondary battery (100) according to claim 1, wherein at least one of the first protrusions (30c) is in direct contact with the first foil-free zone (211a).

3. The secondary battery (100) according to claim 1, wherein the first active material layer (212) is provided with a first groove (2121), the first current collector (211) is partially exposed at the first groove (2121) and forms the first foil-free zone (211a), and the first portion (31) of the first tab (30) is disposed in the first groove (2121); and
the first electrode sheet (21) further comprises a second active material layer (213), the second active material layer (213) is disposed on a surface of the first current collector (211) facing away from the first active material layer (212), and along the first direction (Z), a projection of the second active material layer (213) overlaps with the first groove (2121).

4. The secondary battery (100) according to claim 3, wherein the secondary battery (100) further comprises a separator (23), and a surface of the second active material layer (213) facing away from the first active material layer (212) is stacked with the separator (23);
the second active material layer (213) comprises a first region (2131); and along the first direction (Z), a projection of the first region (2131) coincides with the first groove (2121), and a surface of the first region (2131) facing away from the first current collector (211) is in direct contact with the separator (23).

5. The secondary battery (100) according to claim 3, wherein the secondary battery (100) further comprises a separator (23) and a second electrode sheet (22); wherein along the first direction (Z), the separator (23) is stacked between the first electrode sheet (21) and the second electrode sheet (22), the first electrode sheet (21) is a positive electrode sheet, and the second electrode sheet (22) is a negative electrode sheet;
the second electrode sheet (22) comprises a second current collector (221) and a third active material layer (222), and a surface of the second current collector (221) facing the first active material layer (212) is stacked with the third active material layer (222); and
the third active material layer (222) comprises a second region (2221), along the first direction (Z), a projection of the second region (2221) coincides with the first groove (2121), and a surface of the second region (2221) facing the first groove (2121) is in direct contact with the separator (23).

6. The secondary battery (100) according to claim 1, wherein a second surface (30b) of the first portion (31) is provided with a first insulating layer (61), the first insulating layer (61) is partially embedded between two adjacent second protrusions (30d), and the first insulating layer (61) is bonded to the second protrusions (30d).

7. The secondary battery (100) according to claim 1, wherein along a direction from the first portion (31) to the first foil-free zone (211a), a width of the first protrusions (30c) in a second direction (Y) decreases, and the second direction (Y) is perpendicular to the first direction (Z).

8. The secondary battery (100) according to claim 1, wherein the first adhesive layer (50) comprises hot-melt adhesive, thermosetting adhesive, or pressure-sensitive adhesive.

9. The secondary battery (100) according to any one of claims 1 to 8, wherein the first protrusions (30c) protrude relative to the first surface (30a), the first surface (30a) is further provided with a plurality of first recesses (30e), the first recesses (30e) are recessed relative to the first surface (30a), and the first adhesive layer (50) is embedded in the first recesses (30e).

10. The secondary battery (100) according to claim 9, wherein along the first direction (Z), a height of the first protrusions (30c) is H₁, with 10 µm≤H₁≤30 µm.

11. The secondary battery (100) according to claim 9, wherein along the first direction (Z), a depth of the first recesses (30e) is D₁, with 5 µm≤D₁≤30 µm.

12. The secondary battery (100) according to claim 1, wherein when observed along the first direction (Z), an area of the first surface (30a) of the first portion (31) is S₁, and an area of all the first protrusions (30c) is S₁₁, with 60%≤S₁₁/S₁≤80%.

13. The secondary battery (100) according to claim 9, wherein when observed along the first direction (Z), an area of the first surface (30a) of the first portion (31) is S₁, and an area of all the first recesses (30e) is S₁₂, with 20%≤S₁₂/S₁≤40%.

14. The secondary battery (100) according to claim 1, wherein the first adhesive layer is a non-conductive adhesive.

15. An electronic device, wherein the electronic device comprises the secondary battery (100) according to any one of claims 1 to 14.
